# EUROPEAN PATENT SPECIFICATION

(11) **EP 3 564 856 B1**
(45) Date of publication and mention of the grant of the patent: **29.11.2023**
(21) Application number: 18170218.4
(22) Date of filing: 30.04.2018
(51) Int. Cl.: G06V 10/75, G06F 18/22, G09G 5/00

(54) **IMAGE DATA EVALUATION**
BILDDATENBEURTEILUNG
ÉVALUATION DE DONNÉES D'IMAGE

(43) Date of publication of application: 06.11.2019
(73) Proprietor: Socionext Inc., Yokohama-shi, Kanagawa 222-0033 (JP)
(72) Inventor: MAIER, Martin, 82061 Neuried (DE); CONDER, James Edward, 82061 Neuried (DE)
(74) Representative: Haseltine Lake Kempner LLP

(56) References cited:
- WO-A1-2015/008104

## Description

The present invention relates to image data evaluation, in particular in the context of high contrast images such as display icons.

Such icons may be displayed for example on a display of a vehicle to provide the driver with a warning or other information. Particularly in automotive applications, where safety is a real concern, it is important that a display icon which is actually displayed matches - to a sufficient degree - a reference icon being the icon intended for display. Such an icon may for example be for providing important information to a user such as a driver of a vehicle.

For example, modern vehicles (such as road, rail, water, air or space vehicles) are typically complex systems with correspondingly complex control systems made up of e.g. modular sub-systems. In a vehicle control system, various stages of processing may occur along a communication path between a central processor (issuing a command for an icon to be displayed) and a display controller (ultimately controlling a display). With commands and/or related image data being processed (e.g. converted, compressed, adjusted) any number of times along such a communication path, perhaps depending on which combination of sub-systems is employed, there is a risk that an icon which is actually displayed does not match the reference icon.

It is desirable to address the above problems. It is desirable to allow some differences between display icons and their corresponding reference icons, so that a degree of image processing may be tolerated, but at the same to ensure that the display icons match their corresponding reference icons, i.e. to a sufficient degree depending on the particular circumstances.

Reference may be made to WO 2015/008104 A1, which relates to an apparatus and method for checking the integrity of visual display information and has particular application to checking images displayed in an automotive vehicle, such images containing safety critical information, the image intensity is checked only to an extent commensurate with a human being able to interpret its correct meaning, hence, images which are defective in some way yet still recognisable by the human eye are not classified as failures, in one example, a part of the image containing safety critical information is segmented into smaller areas and the luminance of pixels in each segmented area is compared with a threshold brightness level and a threshold darkness level, and a histogram for each area is generated and compared with a reference.

The present invention is defined by the independent claims, to which reference should now be made. Specific embodiments are defined in the dependent claims.

According to a first disclosed arrangement, there is provided a method of evaluating image data representative of a display icon relative to reference data (e.g. a reference signature) representative of a reference icon to determine whether the display icon matches the reference icon, the reference icon comprising at least first and second image regions (e.g. colour, luminance or contrast regions) which are distinct in image contrast from one another, the image data defining pixel values corresponding to pixels of the display icon, the pixel values representing e.g. the luminance and/or colour of the pixels concerned, the method being carried out in hardware and/or by a computer processor, and the method comprising: for each of a plurality of areas of the display icon, categorising that area as corresponding to (or belonging to, or being associated with) one or none of the image regions based on a comparison between the pixel value or values for that area and at least a plurality of pixel-value ranges defined in relation to the reference icon, the pixel-value ranges corresponding to respective said image regions and defined so as to ensure sufficient image contrast between areas categorised as corresponding to different said image regions; generating categorisation information (e.g. a display signature) representative of the image data indicating how the plurality of areas have been categorised; and determining whether the display icon matches the reference icon based on a comparison of the categorisation information and the reference data, the method being defined in claim 1.

Such a method enables some leniency or tolerance in the evaluation of image data in that the display icon may not be identical to the reference icon but it may still be determined to match the display icon.

The image data may be representative of the display icon in the sense that were it transmitted to a display it would cause the display icon to be displayed on the display.

The reference data (e.g. reference signature) may be generated similarly to the generation of the categorisation information (e.g. display signature). A direct comparison between the reference signature and the display signature, for example on the fly as the display signature is being generated, may be carried out.

The image regions are distinct in image contrast in the sense that the reference icon has high contrast by virtue of the image regions. For example, the reference icon may be made up of a low number of distinct image regions, for example less than 10 or less than 5 or less than 3 (i.e. 2).

The image regions may be referred to as colour (or luminance) regions if the reference icon has high contrast by virtue of its colour (or luminance). The pixel values may represent another property of the pixels, provided that the display icon could have high contrast by virtue of that property.

A pixel-value may correspond with just one pixel. Or, a pixel-value may correspond with a plurality of pixels (e.g. a pixel value may represent an average between those pixels).

The reference icon may be divided into the reference-image regions. For example, the reference image may be divided into only the reference image regions; that is, the reference image may be made up of only the image regions.

At least one of said areas comprises a plurality of pixels, and the categorising comprises, for each of the areas comprising a plurality of pixels, comparing the pixel value of each of the pixels of that area against at least a plurality of the pixel-value ranges and preliminarily categorising each of those pixels as corresponding to one or none of the image regions based on the comparison, and categorising the area concerned based on how its pixels have been preliminarily categorised.

The categorising comprises, for each of the areas comprising a plurality of pixels, categorising that area as corresponding to one of the image regions if a given majority, proportion or number of its pixels have been preliminarily categorised as corresponding to that image region. For example, the categorising may comprise, for each of the areas comprising a plurality of pixels, categorising that area as corresponding to one of the image regions if a tolerance threshold amount more of its pixels have been preliminarily categorised as corresponding to that image region than have been categorised as corresponding to any other image region or other image regions.

The method may comprise, for each of the areas comprising a plurality of pixels, preliminarily categorising each of the pixels of that area as corresponding to one of the image regions if the pixel value for that pixel falls within the pixel-value range for that image region. The method may comprise, for each of the areas comprising a plurality of pixels, preliminarily categorising a pixel of that area as corresponding to none of the image regions if the pixel value for that pixel does not fall within any of the pixel-value ranges against which that pixel value is compared.

That is, a pixel may be preliminarily categorised as corresponding to one or none of the image regions based on whether its pixel value falls within either or none of the pixel value ranges.

The number of pixels in a said area may be dependent upon the arrangement of image regions of the reference icon. The number of pixels in a said area may be dependent on the fineness of image detail of a corresponding area of the reference icon. The number of pixels in each area may be stored in advance in relation to the reference icon.

The number of pixels in a first said area may be smaller than the number of pixels in a second said area if the fineness of detail in an area of the reference icon corresponding to the first said area is higher than the fineness of detail in an area of the reference icon corresponding to the second said area. That is, if a portion of the reference icon has a high fineness of image detail, the area(s) of the display icon that correspond with the area(s) of the reference icon in/encompassing this portion may have fewer pixels than other areas of the display icon (of which the corresponding areas of the reference icon have lower fineness of image detail).

Each of the areas may comprise a plurality of pixels. Each of the areas comprising a plurality of pixels may comprise the same number of pixels.

At least one of the areas may comprise a single pixel. The categorising may comprise, for each of the areas comprising a single pixel, comparing the pixel value of that area against at least a plurality of the pixel-value ranges, categorising the area concerned as corresponding to one of the image regions if the pixel value for that pixel falls within the pixel-value range for that image region, and categorising the area concerned as corresponding to none of the image regions if the pixel value for that pixel does not fall within any of the pixel-value ranges against which that pixel value is compared.

Which of the pixel-value ranges defined in relation to the reference icon the pixel value or values for a said area are compared against may be dependent on the position of the area within the display image. Which of the pixel-value ranges defined in relation to the reference icon the pixel value or values for a said area are compared against may be dependent on the image regions present in the area of the reference icon corresponding to the said area. That is, the pixels of a said area may be compared against pixel-value ranges corresponding to the image regions present in the area of the reference icon corresponding to the said area.

At least one of the pixel-value ranges against which the pixel value or values for a said area are compared may be different from a pixel-value range against which the pixel value or values for another said area are compared.

For a given said area, the pixel value or values concerned may be compared against pixel-value ranges corresponding to (e.g. only) two respective said image regions. The method may comprise, for each of the areas comprising a plurality of pixels, categorising the area as corresponding to one of the two image regions for that area if the number of pixels preliminarily categorised as corresponding to that image region is greater than the number of pixels preliminarily categorised as corresponding to the other image region by a tolerance threshold amount.

The method may comprise, for each of the areas comprising a plurality of pixels, categorising the area as corresponding to one of the two image regions for that area if the number of pixels preliminarily categorised as corresponding to that image region is greater than the number of pixels preliminarily categorised as corresponding to the other image region plus a region bias value.

The tolerance threshold amount may be stored in advance for each said area comprising a plurality of pixels. The tolerance threshold amount may be different for each area of the display icon, and/or may be set depending on the corresponding area of the reference icon. The tolerance threshold amount may be the same for each said area comprising a plurality of pixels. The tolerance threshold amount may be a predefined amount independent of the arrangement of image regions of the reference icon.

The reference data indicates categorisations for reference areas of the reference icon, those categorisations categorising those areas of the reference icon as being in one of the image regions, and the areas of the display icon which are categorised have corresponding said reference areas of the reference icon which have been categorised as being in one of the image regions (areas of the display icon may correspond to reference areas of the reference icon in that they may have corresponding locations with their respective icon).

The reference data may be in the form of a bit string, comprising a bit or bits per reference area of the reference icon which has been categorised as being in one of the image regions, with the values of the bits indicating how those reference areas have been categorised.

The analysis of the reference icon to generate the reference data may be such that no reference area of the reference icon is categorised as being located in (belonging in / corresponding to) none of the image regions. The analysis of the reference icon to generate the reference data may be such that all of the reference areas of the reference icon are categorised as corresponding to one of the image regions.

The categorisation information may comprise a bit or bits per area of the display icon which has been categorised, the values of the bits indicating how those areas of the display icon have been categorised.

The method comprises determining that the display icon matches the reference icon based on whether the categorisation information and the reference data indicate that areas of the display icon have been categorised in the same way as corresponding reference areas of the reference icon (wherein the areas of the display icon may correspond to reference areas of the reference icon in that they may have corresponding locations with their respective icons).

Such a comparison may comprise directly comparing the bits of the reference data with the bits of the categorisation information, e.g. on an area-by-area basis.

The method may comprise determining that the display icon does not match the reference icon if the categorisation information and the reference data indicate that an error threshold amount of the areas of the display icon have been categorised in a different way from corresponding reference areas of the reference icon. That is, the number of areas of the display icon that are categorised differently from their corresponding reference areas of the reference icon may be counted, and the display icon may be determined not to match the reference icon if this number exceeds a particular value, e.g. if the number is more than or equal to an error threshold amount.

The method comprises determining that the display icon does not match the reference icon if a drop threshold amount (particular value) of the areas of the display icon have been categorised as corresponding to none of the image regions. That is, the number of areas of the display icon that are categorised as corresponding to none of the image regions may be counted, and the display icon may be determined not to match the reference icon if this number exceeds a particular value, e.g. if the number is more than or equal to a drop threshold amount.

The method may comprise determining that the display icon does match the reference icon if the categorisation information and the reference data indicate that a given number or proportion of the areas of the display icon have been categorised in the same way as corresponding reference areas of the reference icon.

The method may comprise obtaining the reference data from a remote or local source prior to evaluating the image data.

The pixel values and the pixel-value ranges may comprise red, green and blue components. The pixel values and the pixel-value ranges may comprise components based on another colour system (e.g. cyan, magenta, yellow, key). Each of the pixel-value ranges may comprise an individual pixel-value sub-range for each of the components.

According to a second disclosed arrangement, there is provided evaluation circuitry operable to evaluate image data representative of a display icon relative to reference data representative of a reference icon to determine whether the display icon matches the reference icon, the reference icon comprising at least first and second image regions which are distinct in image contrast from one another, the image data defining pixel values corresponding to pixels of the display icon, the evaluation circuitry configured to carry out the method of the aforementioned first disclosed arrangement.

According to a third disclosed arrangement, there is provided a display system comprising a display and a display controller, the display controller comprising the evaluation circuitry of the aforementioned second disclosed arrangement, wherein the display controller is operable to cause the display to display the display icon based on the image data dependent on whether the evaluation circuitry determines that the display icon matches the reference icon. The display system may be a vehicle display system.

Features of the method aspect may apply to the other aspects *mutatis mutandis.*

Reference will now be made, by way of example, to the accompanying drawings, of which:
Figure 1 is a schematic diagram of a control system;
Figure 2 is an illustration of an icon;
Figure 3 is an illustration of a display icon and representations of pixel values;
Figure 4 is a flow diagram useful for understanding the present disclosure;
Figure 5 is an illustration representing a pixel-value range;
Figure 6 is an illustration representing pixel values;
Figure 7 is an illustration of an icon;
Figure 8 is an illustration of an icon;
Figure 9 is a schematic diagram of circuitry that may be comprised in the control system shown in Figure 1;
Figure 10 is an illustration useful for understanding the operation of the circuitry shown in Figure 9; and
Figure 11 is a schematic diagram of integrated circuitry comprising evaluation circuitry.

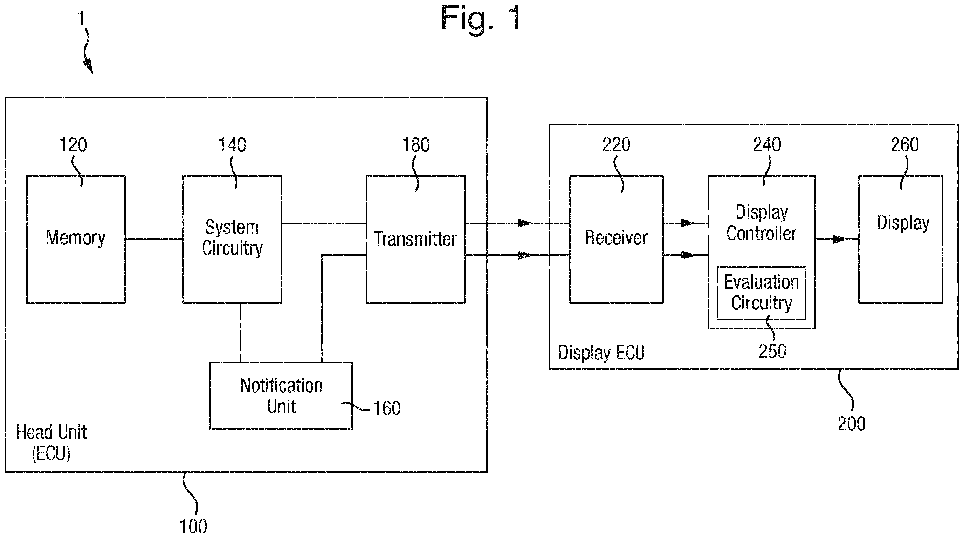

**Figure 1** is a schematic diagram of a control system 1 for example for a vehicle. Control system 1 comprises a head unit 100 and a display ECU (electronic control unit) 200. The head unit 100 could also be referred to as an ECU. The head unit 100 is an example of a central processor, and could be implemented in hardware and/or in software (e.g. a computer program) executed on a computer processor.

Head unit 100 comprises a memory 120, system circuitry 140, a notification unit 160 and a transmitter 180. Display ECU 200 comprises a receiver 220, a display controller 240 and a display 260. The display 260 may for example be a dashboard or head-up display (HUD) of a vehicle, and may be provided separately of the display ECU 200 but connectable to the display controller 240 in some arrangements. The display controller 240 comprises evaluation circuitry 250, one or both of which may be implemented in hardware (although in some arrangements a software implementation may be employed).

System circuitry 140 may be or comprise a computer processor, is connected to the memory 120 and is operable to retrieve from the memory 120 image data representative of an icon that is to be displayed on the display 260. The system circuitry 140 is connected to the transmitter 180. The transmitter 180 is connected to receive from the system circuitry 140 the image data representing the icon that is to be displayed on the display 260.

The system circuitry 140 is also connected to the notification unit 160 to indicate to the notification unit 160 which icon is to be displayed on the display 260. The transmitter 180 is also connected to the notification unit 160. The notification unit 160 is operable to send notification information to the transmitter 180, the notification information being suitable to indicate to the evaluation circuitry 250 (or the display controller 240) the icon that is to be displayed on the display 260. The transmitter 180 is connected to transmit the image data and the notification information to the receiver 220 of the display ECU 200.

The receiver 220 is connected to receive the image data and the notification information from the transmitter 180 of the head unit 100, and to send the image data and the notification information to the display controller 240. The display controller 240 is connected to control the display 260 so that the icon of which the received image data is representative is displayed on the display 260.

The image data is subject to image processing (which may include compression) along the path from the memory 120 to the display 260, for example combining it with other data for display on the display 260. Therefore the icon that is displayed on the display based on this processed image data may be different from that which would be displayed based on the original image data retrieved directly from the memory 120 (i.e. a "perfect" icon, the representative image data not having suffered from the image processing mentioned above).

Incidentally, the same may be the case even if the head unit 100 and the display ECU 200 are provided as a single ECU, for example without the need for the transmitter 180 and receiver 220. Even within a single such unit, image data may be subject to image processing along the path from a memory to a display. The present disclosure will be understood accordingly.

Hereinafter, the icon that is displayed on the display 260 - based on the processed image data provided to the display 260 from the display controller 240 (and itself based on the original image data retrieved directly from the memory 120) - is referred to as a display icon, and the icon which would be displayed based on the original image data retrieved directly from the memory 120, i.e. a "perfect" icon, is referred to as a reference icon.

The evaluation circuitry 250 evaluates the processed image data relative to reference data representative of the reference icon to determine whether the display icon matches the reference icon.

The evaluation circuitry 250 is connected close to an output stage of the display controller 240, in the sense that little to no further image processing is performed on the processed image data after it has been evaluated by the evaluation circuitry 250 and before the corresponding display icon is displayed. The evaluation circuitry 250 may for example be separate from the display controller 240, such that the processed image data is output from the display controller 240 to the display 260 and also to the evaluation circuitry 250, or to the display 260 via the evaluation circuitry 250.

The notification information may be in the form of an index and the display controller 240 (or the evaluation circuitry 250) may be configured to retrieve the corresponding reference data from a lookup table based on that index, and notify the evaluation circuitry 250 of the reference icon intended to be displayed. Or, the notification information may comprise the reference data itself, perhaps in a compressed or otherwise encoded form.

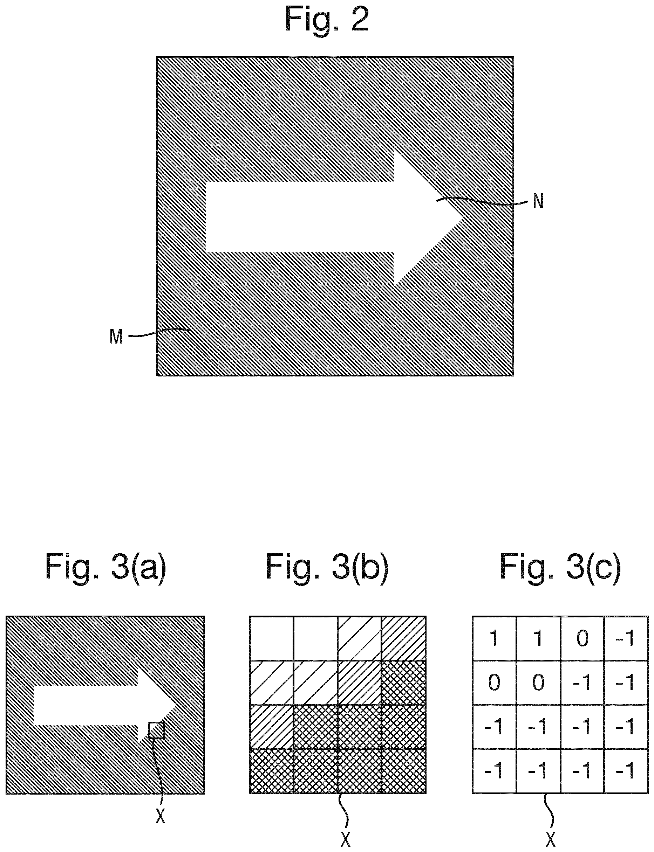

**Figure 2** is an illustration of an example icon which may be displayed on the display 260. It can be seen from Figure 2 that the icon comprises two main image regions, N and M. The icon is such that image regions N and M are distinct from one another in image contrast, as indicated in Figure 2 by hatching in image region M but not in image region N. Put another way, the icon is a high contrast image. Image regions N and M may be distinct from one another in terms of image contrast by virtue of their colour (or hue) and/or by their luminance, or by virtue of other properties of images. Image region N may be referred to as the foreground region and image region M may be referred to as the background region. The icon shown in Figure 2 could, for the purposes of this example, be taken to be a display icon or a reference icon, but later herein will be considered to be an example reference icon in particular.

It should be noted at this juncture that the reference icon may be "perfect", in the sense that even at a boundary between one image region and another the pixels are clearly in one image region or another for example by virtue of their colour. For example, if the reference icon were made up of a red arrow on a black background generally in line with Figure 2, all the pixels in such a perfect reference icon would be either red or black (so that there are only two colours in that reference icon). However, it may be that, although a reference icon appears at a glance to have e.g. only two perfect image regions as in Figure 2, in practice the reference icon includes pixels e.g. at the boundaries between image regions which on closer inspection are not clearly in one image region or another, for example due to antialiasing. Taking the red arrow on a black background example, there may be a variety of shades of red across some pixels at the boundary of the arrow. The present disclosure will be understood accordingly.

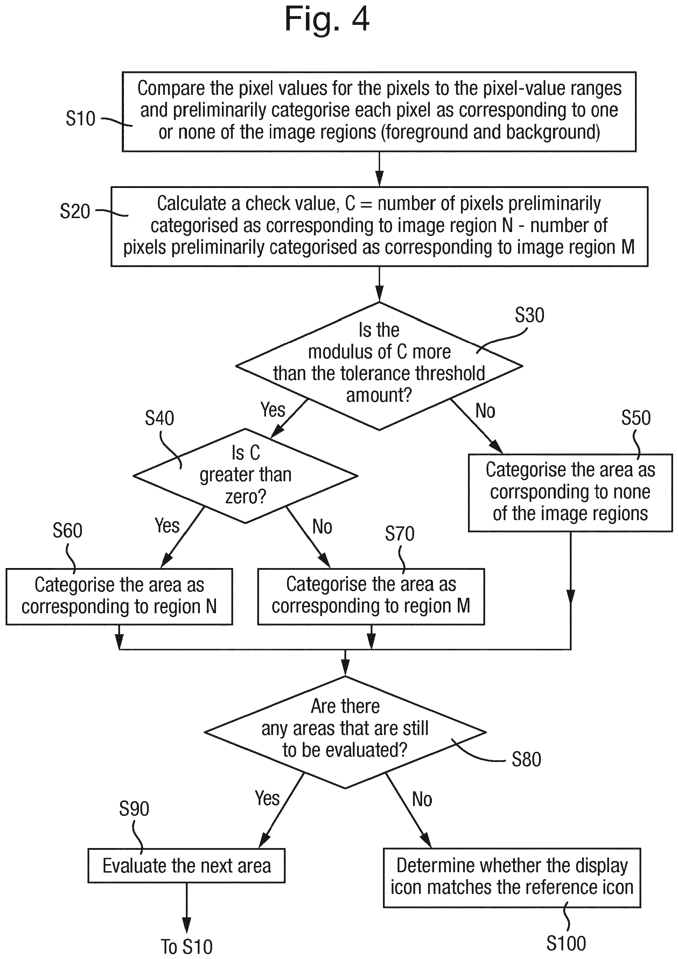

**Figure 3** is useful for understanding the general process underlying the present arrangement. The evaluation performed by the evaluation circuitry 250 is described in terms of an evaluation method as depicted in the flow diagram of **Figure 4****.**

The overall aim of the evaluation method is to categorise areas of the display icon as corresponding to or belonging to particular image regions of the reference icon (or to none of those image regions) and to determine, based on this categorisation, whether the display icon matches the reference icon.

In simple terms, it could be imagined that the display icon is at least partially divided into areas (display areas), and those areas categorised so as to be compared with categorisations of corresponding areas (reference areas) of the reference icon. Further, the more the categorisations match, the more the overall display icon is deemed to match the overall reference icon. Conversely, the less the categorisations match, and/or the less that display areas can be confidently categorised, the less the overall display icon is deemed to match the overall reference icon, Although a degree of matching result is envisaged, in the present arrangements a match or no match decision is assumed. The areas may comprise a plurality of pixels, leading to an "averaging" affect when categorising an area. Further, the categorisations may be based on pixel-value ranges, rather than single values, further enabling some (defined, limited or controlled) tolerance for differences between the display icon and the reference icon.

When implemented in the control system 1 shown in Figure 1, for example in the evaluation circuitry 250, if it is determined that the display icon matches the reference icon then the display icon may be displayed on the display 260. If, however, it is determined that the display icon does not match the reference icon then the display controller 240 or the evaluation circuitry 250 itself may correct the (processed) image data so that the display icon matches the reference icon, or the display controller 240 or the evaluation circuitry 250 may prevent the display icon from being displayed and/or notify another part of the control system 1 (or external circuitry) of a system error.

Taking the Figure 2 icon as the basis of a running example, as part of the evaluation by the evaluation circuitry 250 the display icon is effectively divided into (or handled/processed in terms of) component areas, comprising the same number of pixels as one another for convenience, so that the areas together encompass the whole of the display icon. For example, such areas may be referred to as tiles which make up the display icon. One such area, X, is shown in Figure 3(a) which represents the display icon. It may be taken here that Figure 2 is representative of the corresponding reference icon.

In other examples, the areas may not have the same number of pixels and may not together encompass the whole of the display icon, as is described below.

The image data defines pixel values that represent a property or properties of pixels of the icon when it is displayed on the display 260. For example, a pixel value for a pixel may represent the colour of that pixel, and/or may represent the luminance or another property of that pixel. Further, a pixel value may represent the colour and/or luminance (or another property) of a plurality of pixels (e.g. it may represent an average value calculated based on those pixels).

The area X is shown in Figure 3(b), where its component pixels are represented as a regular array of squares, each square representing a pixel. In the running example, each pixel value is taken to represent the colour of its corresponding pixel, and this is demonstrated visually by hatching in Figure 3(b).

Turning to Figure 4, the evaluation method comprises steps S10 to S100. In step S10, based on received (processed) image data representative of the display icon (i.e. which would be used to display the display icon on the display 260), the pixel values for the pixels of an area of the display icon are compared against defined (e.g. pre-stored or predetermined) pixel-value ranges to preliminarily categorise each pixel as corresponding to one or none of the image regions of the corresponding reference icon. In the running example, the image regions of the reference icon are regions M and N in Figure 2.

The pixel-value ranges are defined so as to ensure sufficient image contrast between areas categorised as corresponding to different image regions. That is, in this example, the pixel-value ranges are defined so as to ensure sufficient contrast between areas categorised as corresponding to the image region N and areas categorised as corresponding to the image region M.

In the running example, the preliminary categorisation of a pixel is implemented by the assignation of a number, 1, 0 or -1, to that pixel. Figure 3(c) shows the preliminary categorisation for the pixels of the area X in the running example.

For example, the pixel represented by the square at the bottom right of the grid shown in Figure 3(c) is assigned the value -1. This is because the pixel value for that pixel falls within the pixel-value range for the image region M (i.e. the pixel value indicates that the pixel, when displayed as part of the display icon on the display 260, will have a colour that falls within the pixel-value range for the image region M).

The pixel represented by the square at the top left of the grid shown in Figure 3(c) is assigned the value 1. This is because the pixel value for that pixel falls within the pixel-value range for the image region N (i.e. the pixel value indicates that the pixel, when displayed as part of the display icon on the display 260, will have a colour that falls within the pixel-value range for the image region N).

The pixel represented by the square of the first column (numbering from the left) and the second row (numbering from the top) of the grid shown in Figure 3(c) is assigned the value 0. This is because the pixel value for that pixel does not fall within the pixel-value range for any of the image regions N and M (i.e. the pixel value indicates that the pixel, when displayed as part of the display icon on the display 260, will have a colour that does not fall within the pixel-value range for either the image region M or the image region N).

The values assigned to the pixels of the area X are then summed to calculate a check value C for the area X (S20). Looking at Figure 3(c), the check value C for area X is -9.

In the running example the pixels are assigned the values 1, 0 or -1. This is merely an example of how to readily categorise an area based on the preliminary categorisation of that area's pixels. For example, a check value C could be calculated in S20 by subtracting the number of pixels preliminarily categorised as corresponding to image region M from the number of pixels preliminarily categorised as corresponding to image region N. Further, this step (S20) of the method may be carried out differently if the reference icon comprises more than the two image regions as in Figure 2, as described below.

The modulus of the check value C is then compared against a tolerance threshold amount (step S30). If the modulus of the check value C is more than the tolerance threshold amount (Yes at step S30) then the method proceeds to step S40. If the modulus of the check value C is not greater than the tolerance threshold amount (No at step S30) then the method proceeds to step S50. At step S50, the area is categorised as corresponding to none of the image regions. The setting of the tolerance threshold amount is described later herein.

At step S40 it is determined whether the check value C is greater than zero. If the check value C is greater than zero (Yes at step S40), the method proceeds to step S60 in which the area is categorised as corresponding to image region N (foreground). If the check value C is not greater than zero (No at step S40) the method proceeds to step S70, in which the area is categorised as corresponding to image region M (background). The check value C may be compared to a value other than zero (or a region bias value may be added to or subtracted from the check value). The region bias value may be the same or different for each display icon and/or it may be the same or different for each area of the display icon.

From steps S50, S60 and S70 the method proceeds to step S80, where it is determined if there are any areas that are still to be evaluated. If there is at least an area that is still to be evaluated then the method proceeds to step S90, and the above process is repeated for the next area. If there are no areas that are still to be evaluated then the method proceeds to step S100, where it is determined whether the display icon matches the reference icon, and the evaluation method of Figure 4 terminates. It will be appreciated that which (display) areas are to be evaluated may be related to which corresponding (reference) areas of the reference icon have effectively been categorised, as will be explained later.

At step S100, the evaluation circuitry 250 generates categorisation information indicating how the areas have been categorised. The evaluation circuitry 250 determines whether the display icon matches the reference icon based on a comparison of the reference data and the categorisation information.

In the running example, the evaluation circuitry 250 is operable to generate the categorisation information as a signature (a display signature). In particular, a display-signature bit is created for each area that has been categorised as corresponding to image region N (step S60) or M (step S70). If the area is categorised as corresponding to image region N (step S60) then a "1" is generated as the corresponding display-signature bit and if the area is categorised as corresponding to image region M (step S70) then a "0" is generated as the corresponding display-signature bit.

The reference data may be a corresponding signature (a reference signature), which could be generated similarly to the way described above in relation to Figures 3 and 4, but for the reference icon instead of the display icon. Such categorisation if applied to the reference icon would of course categorise areas of the reference icon as being located "in" one (or potentially none) of the image regions, rather than as "corresponding to" such image regions.

Further, in the present arrangement, when a pixel of the reference icon is preliminarily categorised, it is preliminarily categorised as being located in one of the image regions (i.e. not none of the image regions). Similarly, when an area of the reference icon is categorised, it is categorised as being located in one of the image regions (i.e. not none of the image regions). This can be implemented when analysing the reference icon for example by preliminarily categorising pixels as being located in one image region (e.g. M, the background) unless they are clearly in the other image region (e.g. N, the foreground), and by setting the tolerance threshold amount for the reference icon to be less than zero, or by not implementing any checking against a tolerance threshold amount. That is, all reference areas may be categorised as being in one image region or another, regardless of how confident those categorisations may be. In another arrangement, it would be possible to exclude some reference areas from categorisation, and then also not evaluate and categorise corresponding areas of the display icon.

Such processing may be carried out in advance so that the reference signature is stored in the evaluation circuitry 250 (or the display controller 240), to be retrieved when the evaluation circuitry 250 (or the display controller 240) receives the notification information. Alternatively, the reference signature may be stored in the memory 120 and may be sent to the evaluation circuitry 250 (or the display controller 240) as the notification information.

The display signature and/or the reference signature may be compressed for example by RLE (run-length encoding) compression. The categorisation information may take another format from that mentioned above, as may the reference signature. For example, the reference signature need not take the same format as the categorisation information, as long as the categorisation information and the reference signature can be compared in order to determine if the display icon matches the reference icon.

In the running example, the evaluation circuitry 250 compares the display signature against the reference signature, and determines whether areas of the display icon have been categorised in the same way as the corresponding area of the reference icon.

It is should be noted that in the present example, if the (display) area is categorised as corresponding to none of the image regions (step S50), the area is considered to be "dropped" and a count of the number of such dropped areas is incremented without a corresponding display-signature bit being generated. This of course may lead to a display signature which does not have as many bits as the number of areas which have been categorised. In this case, the bits of the display signature can be compared to the corresponding bits of the reference signature as they are generated, so that a display-signature bit for a given area of the display icon is readily compared against the reference-signature bit for the corresponding area of the reference icon.

This is an efficient technique in terms of memory requirements, as only a single display-signature bit is required for each area of the display icon that has been categorised as corresponding to image region N (step S60) or M (step S70), and only a single reference-signature bit is required for each area of the reference icon. However, in another arrangement the display-signature bits could be accompanied by e.g. addresses, so that it is known to which area the display-signature bit relates, or multi-bit values could be stored for each area so that a value can be stored in the display signature that indicates that the area is considered to be dropped (with there then being a multi-bit value per area regardless of how the areas have been categorised). In these latter cases, the display signature could be configured to have the same number of bits/entries as the reference signature (i.e. both being formatted in the same way) so that the signatures could readily be compared after the display signature has been generated.

Returning to the present example, if an area of the display icon has been categorised as corresponding to a particular image region (e.g. N), but a corresponding area of the reference icon (i.e. at the same position within the reference icon as the area of the display icon is within the display icon) has been categorised as being located in a different image region (e.g. M), then the evaluation circuitry 250 determines that this area of the display icon does not match its corresponding area of the reference icon and this is recorded as an error.

Similarly, if an area of the display icon has been categorised as corresponding to none of the image regions, then the evaluation circuitry 250 determines that this area of the display icon does not match its corresponding area of the reference icon and that area is not subject to such a comparison relying instead on the incrementing of the count of the number of dropped areas as reflecting the situation.

The evaluation circuitry 250 counts the number of such errors and also the number of dropped areas.

The evaluation circuitry 250 is configured to determine that the display icon does not match the reference icon if the number of errors is greater than an error threshold amount. The error threshold amount may be set differently for each possible icon that may be displayed or it may be set independently of which icon is to be displayed.

The evaluation circuitry 250 is configured to determine that the display icon does not match the reference icon if the number of dropped areas (categorised as corresponding to none of the image regions) is greater than a dropped threshold amount (e.g. set at 25% or some other proportion of all areas evaluated in the display icon). In this case, the evaluation circuitry 250 is configured to determine that the display icon does not match the reference icon if the number of dropped areas is greater than the dropped threshold amount even if the number of errors is equal to or less than the error threshold amount. For example, a display icon could have many or even all of its areas categorised as corresponding to none of the image regions due to poor image contrast as the result of image processing, but still be determined to match the reference icon were this check against the dropped threshold amount not in place.

The error threshold amount may be set such that if the display icon differs from the reference icon only in that one of the image regions (e.g. image region N) is shifted with respect to the other image region (e.g. image region M), it is still determined that the display icon matches the reference icon. It will be appreciated that how the error threshold amount is set, and indeed the dropped threshold amount, may be dependent on the particular icon concerned and/or on what types and amounts of difference between reference and display icons are deemed acceptable.

As described above, different areas may have different numbers of pixels from one another. As an example, if there is a part of an icon that has finer image detail (e.g. with the relevant image regions being relatively smaller and/or thinner) than another part or other parts of the icon, then the area or areas encompassing the part of the display icon that has finer detail may have fewer pixels than areas encompassing other parts of the display icon (parts with less fine detail). An area with fewer pixels than another area is smaller in size than that other area, and so areas covering parts of the display icon with finer detail may be smaller than areas covering other parts of the display icon (parts with less fine detail).

If the number of pixels is too large in an area (i.e. if an area is too large), for example, then fine detail in that area of the display icon may not be recognised by the evaluation circuitry 250 (i.e. the fine detail would be lost in the "averaging" process of categorising that area as corresponding to one or none of the image regions). Fine detail could, for example, be text or any part of an icon comprising relatively thin lines. Put another way, if the size of each area (the number of pixels in each area) is set to be too large, then any detail in the display icon will not be "seen" by the evaluation circuitry 250 (i.e. it will be lost in the averaging process).

Incidentally, although in the above running example the areas which are subject to categorisation collectively make up the whole of the display icon, they need not do so. One example mentioned above is that there may be (reference) areas of the reference icon which have not been categorised, in which case corresponding areas of the display icon need not be categorised either. As another example, the (display) areas may encompass only some of the display icon (e.g. the part or parts that are more important to a user of a vehicle in which the icon is displayed, and/or the part or parts that are the most or the least likely to be different from corresponding parts of the reference icon). For example, such areas may be located within the display icon so that they encompass mainly one image region in particular.

The areas are illustrated in the above running example as square in shape, and hence may readily be referred to as tiles, however the areas may take any shape, and they need not all have the same shape. Further, the areas may overlap with one another in some arrangements.

The pixel-value ranges will now be considered in more detail.

The pixel-value ranges are set so as to ensure sufficient image contrast between areas categorised as corresponding to one image region (e.g. N) and areas categorised as corresponding to another image region (e.g. M), and potentially also ensure limits on other aspects of the pixel values such as the colours they represent. Being ranges, the pixel-value ranges also allow some degree of flexibility on how closely the display icon need resemble the reference icon in order to be determined to match it. It may for example be important in a given case that the display icon matches the reference icon to the extent that like areas have the same (or closely similar) colours with the same (or similar) image contrast between those colours. However, in another case it may be that it is unimportant exactly which colours are used in a display icon as long there is sufficient contrast between regions of the display icon and those regions correspond in location to image regions of the reference icon.

Thus, if the pixel-value ranges relate to the colour of the pixel, the pixel-value ranges may be set such that there is a sufficient range of colours between (separating) the pixel-value colour range for one image region and the pixel-value colour range for another image region, i.e. so that no pixels are preliminarily categorised as corresponding to a particular image region and are too close in colour to pixels that are preliminarily categorised as corresponding to another image region such as to permit poor image contrast. Corresponding considerations apply where the pixel-value ranges relate to the luminance of the pixels, or to another property of the pixels.

In Figure 2, image region N may represent the foreground of the display icon and image region M may represent the background of the display icon. In some applications, the background may be changed and/or it may be that the user of a vehicle comprising the control system 1 (Figure 1) is less sensitive to changes in the background. For this reason, the pixel-value range for image region N (foreground) may be set to be relatively narrow whilst the pixel-value range for image region M (background) may be set to be relatively broad.

The pixel-value ranges may therefore be set (along with the threshold amounts mentioned above) to ensure that the desired image contrast is present in the display icon if it is determined to match the reference icon, placing limits on which colours are used to the extent deemed important. The pixel-value ranges (being ranges) allow some flexibility in how closely the display icon need represent the reference icon in order to be determined to match, but without permitting differences which would be considered e.g. unsafe or unacceptable in the particular circumstances. For example, in the context of the arrow icon in Figure 2, if the reference icon were to comprise a red arrow (image region N) on a black background (image region M), a display icon having a red arrow on a grey background, or a lighter red arrow on a black background, may be considered acceptable, but a display icon having a green arrow on a black (or any other) background may be considered unacceptable, and the pixel-value ranges may be set accordingly. From a safety perspective, a green arrow may mean something quite different from a red arrow to e.g. a driver of a vehicle.

In the case that the pixel-value ranges relate to the colour of a pixel, a pixel-value range may be defined or made up of three sub-ranges - a sub-range for each of the red, green and blue colour components of the pixel colour where the RGB (red green blue) colour model is used. Other colour models may be used, for example the CMYK (cyan magenta yellow key) colour model, in which case a pixel-value range may be made up of corresponding sub-ranges (e.g. four sub-ranges in the case of the CYMK colour model).

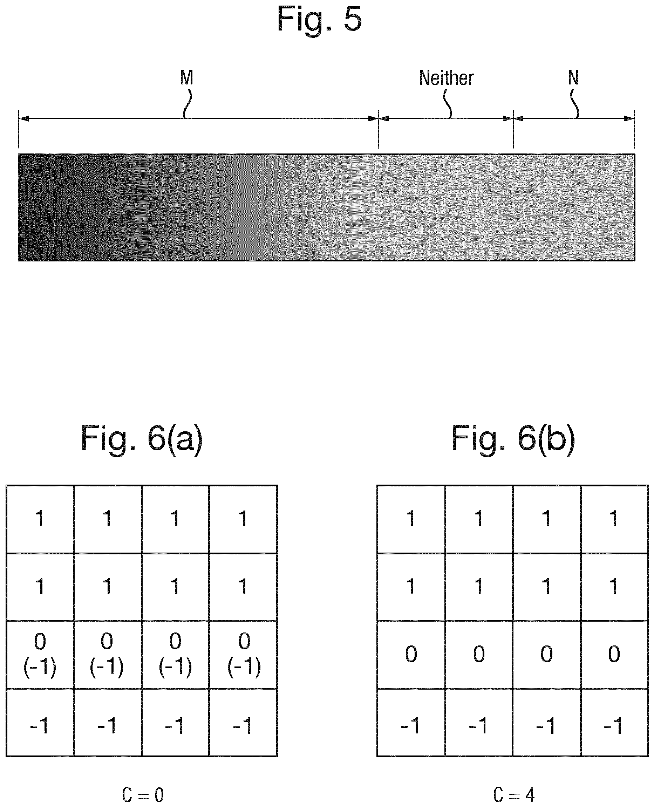

**Figure 5** is a schematic diagram indicating how pixel-value ranges for the example image regions N and M may be arranged. The range between the ranges for the example image regions N and M is labelled "NEITHER". To ensure sufficient image contrast, this middle range, "NEITHER" is effectively set to be relatively broad. The skilled person will understand how to set such ranges in order to ensure the necessary degree of image contrast.

The pixel-value ranges in Figure 5 are shown in grayscale for simplicity. They could represent overall colour ranges for the regions M and N or they could each represent an individual component sub-range for a region. For example, the pixel-value ranges shown in Figure 5 could represent the M, N and NEITHER pixel-value sub-ranges for the blue component of a pixel (in the RGB colour model).

In the running example, the RGB colour model is assumed to be used. Also, as mentioned above, image region M represents the background region of the reference icon and image region N represents the foreground of the reference icon. For a given area of the display icon, the evaluation circuitry 250 is configured to compare the component parts of the pixel value for the red, green and blue components of the colour for each pixel against the pixel-value sub-ranges for the red, green and blue colour components, respectively.

In the running example, if the evaluation circuitry 250 determines that any of a pixel's colour component pixel values (red, green or blue) is in the corresponding pixel-value sub-range for region M (background), then the evaluation circuitry 250 preliminarily categorises that pixel as corresponding to image region M. If the evaluation circuitry 250 determines that none of a pixel's colour component pixel values (red, green or blue) is in the corresponding pixel-value sub-range for region M, and also determines that any of the pixel's colour component pixel values (red, green or blue) is in neither of the corresponding pixel-value sub-ranges for M and N (i.e. is in the corresponding pixel-value sub-range labelled "NEITHER" in Figure 5) then the evaluation circuitry 250 preliminarily categorises that pixel as corresponding to neither image region M or N. If the evaluation circuitry 250 determines that all of a pixel's colour component pixel values (red, green and blue) are in the corresponding pixel-value sub-ranges for region N (foreground), then the evaluation circuitry 250 preliminarily categorises that pixel as corresponding to image region N (foreground).

It will be appreciated that in this example the criteria for a pixel being categorised as corresponding to image region N (foreground) are relatively tough, to limit the cases in which areas can be categorised effectively as foreground areas. This implies a degree of importance associated with foreground image regions which may seem appropriate in the case of typical icons since the main information content is typically conveyed by the foreground regions. However, other criteria for the preliminary categorisation of pixels may be implemented. Of course, similar considerations apply to the usage of other colour models.

The setting of the tolerance threshold amount will now be described in more detail.

The tolerance threshold amount may be zero or the tolerance threshold amount may be non-zero (positive or negative). The comparison of the modulus of the check value C against the tolerance threshold amount means that areas with more pixels preliminarily categorised as corresponding to one image region (e.g. N) than the other (e.g. M) are not categorised as corresponding to that image region (N) unless there are sufficiently more pixels (as defined by the tolerance threshold amount) preliminarily categorised as corresponding to that image region (N) than to the other image region (M).

The tolerance threshold amount may be different for each area or it may be the same. The tolerance threshold amount may be different for each display icon or it may be the same for all display icons.

In some cases, the tolerance threshold amount is set such that areas which would otherwise be categorised as corresponding to the "wrong" image region are instead categorised as corresponding to none of the image regions, to prevent increasing the number of errors counted by the evaluation circuitry 250 unnecessarily (i.e. when the image contrast of the display icon is such that a user of the system may not perceive the area to correspond particularly to either image region).

The tolerance threshold amount may for example be set to be the number of pixels along the longest straight line of an area, as explained below in relation to Figure 6. That is, for a square area of four pixels in length on each side, i.e. of 4x4 pixels, the tolerance threshold amount may be set to be 4.

**Figure 6** illustrates the preliminary categorisation of pixel values in an area (i.e. step S10 of Figure 4). Figure 6(a) represents the preliminary categorisation of pixels in an area of the reference icon and Figure 6(b) represents the preliminary categorisation of pixels in the corresponding area of the display icon. In this example, an edge between two image regions (e.g. M and N) falls across the area of the reference icon (this is indicated by 0 entries Figure 6(a) and Figure 6(b)).

It is assumed that the evaluation method described above is applied to the reference icon for the sake of argument (e.g. to generate the corresponding reference data or signature), but with the pixels along the edge line preliminarily categorised as being located in the region M (background) - even though their values are in the "NEITHER" range - so that reference areas will be categorised as being in one image region or another. The bias with pixels in the reference icon here is - as above - to preliminarily categorise them as in region M (background) unless they are in clearly in region N (foreground).

Looking at Figure 6(a), the pixels to one side of the edge line are preliminarily categorised as being located in one image region whilst the pixels to the other side of the line are preliminarily categorised as being located in the other image region. In this example, 8 pixels are preliminarily categorised as being in region N (foreground), 4 pixels are seen as edge pixels but are preliminarily categorised as being in region M (background) as indicated with a "-1" in brackets, and 4 pixels are preliminarily categorised as being in region M (background). The check value C for that area is therefore 0, so that the area is categorised as being located in image region M (background). It could be assumed here that a tolerance threshold amount of e.g. -1 is applied for reference areas or effectively that the tolerance threshold amount does not apply with positive values of C being needed for region N (foreground).

The corresponding area of the display icon is then assumed to be processed according to Figure 4, ignoring the possible effect of any image processing which has been applied to the image data. Therefore the check value for this area (Figure 6(b)) is 4, so that the area is categorised (in step S60) as corresponding to image region N (foreground) as long as the tolerance threshold amount is for example 3 or lower, and an error would be recorded. If the tolerance threshold amount in this example (applied only to the display icon) were instead set to be 4 (i.e. the number of pixels along the longest straight line - in terms of the number of pixels - of the area) then the area in Figure 6(b) would be categorised as corresponding to none of the image regions (at step S50 after "No" at step S30), and therefore no error would be counted for this area.

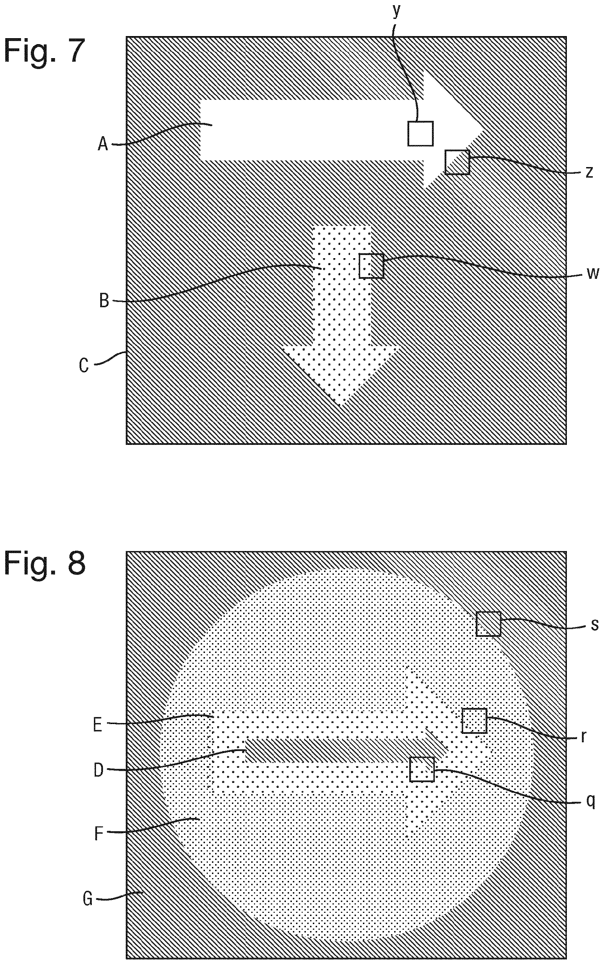

In the running example, there were only two image regions, M and N, as in Figure 2. However there may be more than two image regions. **Figure 7** is an illustration of an example icon comprising three image regions, A, B and C.

In an example arrangement, the pixel-value ranges against which the evaluation circuitry 250 is configured to compare the pixel values for pixels of an area may be dependent upon the position of the area within the display icon (or upon the position within the reference icon of the area of the reference icon corresponding to that area of the display icon). For example, when evaluating the area labelled y in Figure 7, the evaluation circuitry 250 could be configured to compare the pixel values against pixel-value ranges for the image regions A (as foreground) and C (as background). When evaluating the area labelled z in Figure 7, the evaluation circuitry 250 could be configured to compare the pixel values against pixel-value ranges for the image regions A and C. When evaluating the area labelled w in Figure 7, the evaluation circuitry 250 could be configured to compare the pixel values against pixel-value ranges for the image regions B (as foreground) and C (as background).

The evaluation performed by the evaluation circuitry 250 may also entail comparing the pixels in any areas against pixel value ranges for all three image regions, and the method described in the example above may be altered accordingly (i.e. the criteria for categorisation of each area as corresponding to one or none of the image regions based on the preliminary categorisation of the pixels in that area will be altered accordingly). For example, the criteria may be that an area is categorised as corresponding to an image region if at least a proportion of its pixels are preliminarily categorised as corresponding to that image region, relative to its pixels that have been categorised as corresponding to any of the other image regions.

In another example the evaluation circuitry may perform the processing described below in relation to Figures 8, 9 and 10 to evaluate the icon shown in Figure 7.

**Figure 8** is an illustration of an icon comprising four image regions, D, E, F and G. The image contrast between the image regions is represented by hatching and stippling. In Figure 8, image regions D and G have the same hatching. This is representative of the case in which image regions D and G have the same colour if the pixel-value ranges relate to colour, or the same luminance if the pixel-value ranges relate to luminance (or that image regions D and G are the same regarding another property if the pixel-value ranges relate to that property). That is, the evaluation circuitry 250 will "see" a pixel of image region D and a pixel of image region G to have the same pixel value (or pixel values within the same pixel-value range).

In this example, as in the last example, the pixel-value ranges against which the evaluation circuitry 250 is configured to compare the pixel values for pixels of an area is dependent upon the position of the area within the display icon (or upon the position within the reference icon of the area of the reference icon corresponding to that area of the display icon).

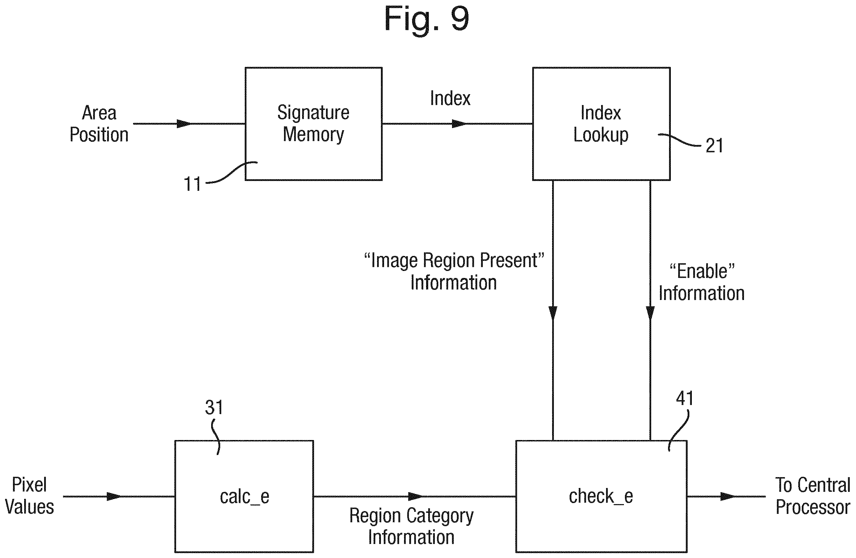

**Figure 9** is a schematic diagram of part of a system that may be comprised within the evaluation circuitry 250 in the case of a reference icon that has multiple image regions. In this example, an implementation for the evaluation of the icon shown in Figure 8 is described for ease of understanding.

In this specific implementation, there is a calculation unit 31 for each pixel-value range that corresponds to an image region. For example, if the image regions are distinct in image contrast because of their colours, there is then a calculation unit 31 for each colour-range. The pixel-value ranges for the image regions are given labels for convenience in the following explanation. The pixel-value range for the image regions D and G in Figure 8 is given the label dg. The pixel-value range for the image region E in Figure 8 is given the label e. The pixel-value range for the image region F in Figure 8 is given the label f.

For the icon shown in Figure 8 the evaluation circuitry 250 (in this implementation) therefore comprises three calculation units 31 since although there are four image regions, two of these regions are assumed to have the same colour. The calculation unit 31, "calc_e" and the associated checker 41 (described later) and index lookup 21 (described later) shown in Figure 9 constitute a representative example which corresponds with the pixel-value range e.

Each calculation unit 31 is configured to implement steps S10 to S80 of the flow diagram shown in Figure 4. Each calculation unit 31 is configured to compare pixel values against the pixel-value range to which that calculation unit 31 corresponds. For example, calculation unit 31 is configured to compare pixel-values against the pixel-value range e (the pixel-value range for preliminarily categorising pixels as corresponding to the image region E in Figure 8). The other two calculation units 31 (not shown) comprised in the evaluation circuitry 250 are respectively configured to compare pixel values against the pixel-value ranges dg and f.

For each of the calculation units 31, the pixel-value range could be as is illustrated in Figure 5, wherein, for example for pixel-value range e, N is instead E, and M is instead "Other" - i.e. the calculation unit 31 is configured to preliminarily categorise pixels as corresponding to either image region E or image region "Other" (or to neither). It may be that there are two ranges for "Other" and two for "Neither", the range for a particular image region being between the two ranges for "Neither".

The calculation units 31 are configured to then categorise areas as corresponding to one or none of the image regions (i.e. calculation unit 31 calc_e of Figure 9 is configured to categorise areas as corresponding to either image region E, or image region "Other", or neither of these).

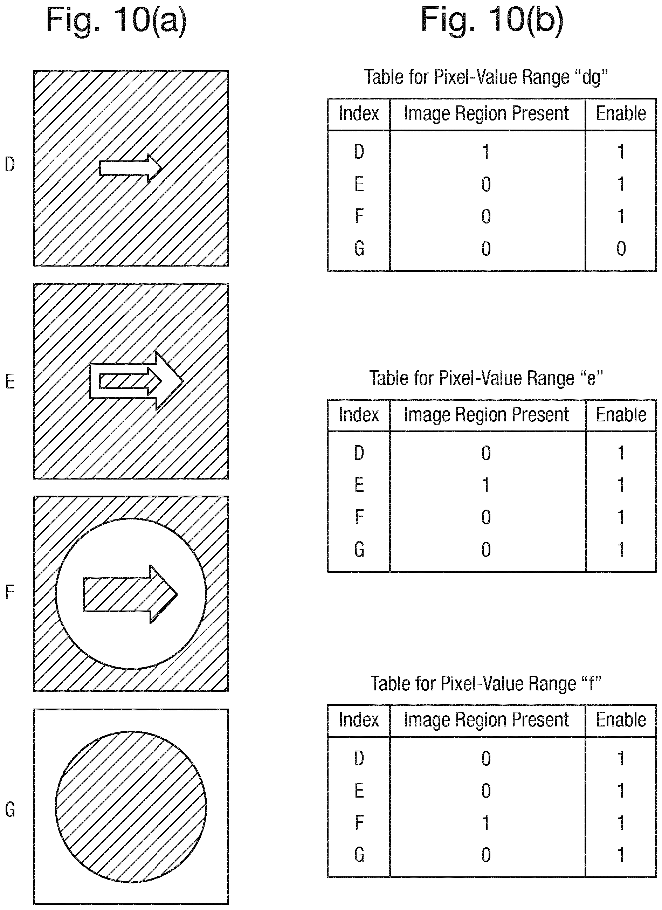

**Figure 10** is an illustration helpful in understanding the processing performed by the evaluation circuitry 250 of this implementation.

To generate the reference signature, an analysis of the reference icon is carried out (in advance) such that image regions are isolated, and each isolated image region is given an index, as shown in Figure 10(a). This analysis may be carried out in a similar way to the evaluation of the display icon described above, except that areas are categorised as being located "in" one or none of the image regions, rather than as "corresponding to" one or none of the image regions.

Each area that is categorised as being located in one of the image regions is assigned the index given to the image region to which it has been categorised as being located in. For example, an area that is categorised as being located in image region D is assigned the index D. Figure 10(a) represents how the areas are assigned indexes. The unhatched portions of the reference icon shown in Figure 10(a) represent the collective areas that have been assigned that index. For example, the unhatched portion of the reference icon shown beside the index D represents collectively the areas that have been assigned the index D (i.e. the areas that have been categorised as being located in image region D).

Incidentally, the indexes may be assigned so that some reference areas are not assigned an index - i.e. so that some areas are effectively ignored in the evaluation process. The display areas corresponding with those reference areas will then not be evaluated by the evaluation circuitry 250.

The reference signature (reference data) in this example includes a table stored for each pixel-value range and the indexes for the areas of the reference image. The tables may be stored in the index lookup 21 (or they may be stored in another memory). For example, in this case three tables are stored, one for the pixel-value range dg (for image regions D and G), one for the pixel-value range e (for image region E) and one for the pixel-value range f (for image region F). The three tables are shown in Figure 10(b).

Each table contains three columns, "Index", "Image region present" and "Enable". Each table contains, in this case, four rows, one for each index (i.e. one for each image region).

The "Index column" for each table contains the indexes of the image regions.

The "Enable" column for each table contains "Enable information" indicating to each checker 41 (described below) whether a comparison should take place.

The "Image region present" column contains information indicating whether the pixel-value range to which the table corresponds, corresponds with the image region to which each index relates (provided that the "Enable information" for that index indicates that a comparison should be carried out). For example, the "Image region present" column contains a 1 if the pixel-value range corresponds with the image region and a 0 if the pixel-value range does not correspond with the image region. For example, the second table in Figure 10(b) corresponds with pixel-value range e. Therefore this column contains a 1 for index E, which relates to image region E, and a 0 for the other indexes.

Referring again to Figure 9, the evaluation of an area of the display icon will be described. Each calculation unit 31 outputs region category information to the corresponding checker 41 for each area of the display icon that it evaluates. Each calculation unit 31 outputs the region category information as a 1 if the area has been categorised as corresponding to its image region, a 0 if the area has been categorised as corresponding to "Other" (one of the other image regions), or a drop signal if the area has been categorised as corresponding to none of the image regions. (That is, the calculation unit 31, "calc_e", in Figure 9 outputs a 1 if the area has been categorised as corresponding to image region E or a 0 if the area has been categorised as corresponding to "Other" (image regions D, F or G).)

The signature memory 11 retrieves the index based on the position of the area being evaluated within the display icon, and outputs this index to each of the index lookups 21. That is, the signature memory retrieves the index that was assigned to the area of the reference icon that is located within the reference icon at the same position as the area of the display icon is located within the display icon. Taking an example, if the area being evaluated corresponds with an area of the reference icon that is categorised as being located in image region F, then the signature memory 11 outputs to each index lookup 21 the index F.

Each index lookup 21 refers to a corresponding one of the tables in Figure 10(b). For example, the index lookup 21 in Figure 9 is within the circuitry for pixel-value range e, and so refers to the table for the pixel-value range e. Each index lookup 21 transmits to the corresponding checker 41 the information contained in the columns "Image region present" and "Enable" for the row containing the index F (the index received from the signature memory).

The checker 41 in Figure 9 in this example receives the information contained within the columns "Image region present" and "Enable" for the row containing the index F of the table for the pixel-value range e, and the region category information from the calculation unit 31 ("calc_e"). If the region category information is a drop signal, the checker 41 performs no comparison and may output a signal indicative of the drop signal for example to a central processor comprised in the evaluation circuitry 250 (not shown). If the region category information is not a drop signal, the checker 41 performs processing as follows.

If the "Enable" information is a 1, then the checker 41 compares the region category information against the "Image region present" information. If the "Enable" information is 0, the checker 41 does nothing for that area (or it may generate a signal indicative of the "Enable" information to the central processor).

If the checker 41 compares the region category information against the "Image region present" information, the process is as follows. If the region category information and the "Image region present" information are the same then the checker 41 outputs a signal indicative of the match for example to the central processor. If the region category information and the "Image region present" information are not the same then the checker 41 outputs a signal indicative of the non-match (e.g. an error signal) for example to the central processor.

The "Enable information" column in the table corresponding to pixel-value range dg contains a 0 for the index G. This is because, since the "Enable information" column in the table corresponding to pixel-value range e contains a 1 for the index G, there is no need for the checker to perform another comparison, since it is taken here (for simplicity) to be sufficient that image region G (the background) does not have areas categorised as corresponding to other image regions (i.e. it is taken to be not essential for the areas corresponding with index G to be categorised as corresponding to image region G, so long as they are not categorised as corresponding to a different image region).

Another factor may be that the pixel-value range dg may be defined narrowly to enable the foreground region D to be identified (within narrow constraints), and in this case that range dg may be too narrow to apply to the background region G since it may be desired that there is some greater flexibility in that region (and applying range dg may lead to too many errors). In another arrangement, separate pixel-value ranges d and g (with differing range widths) could be used, instead of combined range dg, so that the regions D and G can be positively identified separately.

The central processor then compiles all of the information received from each of the three checkers 41, for each area that is evaluated, and performs an evaluation to determine whether or not the display icon matches the reference icon. There are many possible criteria for determining that the display icon matches the reference icon based on this information.

In embodiments, the central processor compares the number of drop signals received from each checker and determine that the display icon does not match the reference icon if this number exceeds a particular value (drop threshold amount). Additionally, the central processor could determine that the display icon does not match the reference icon if the number of non-match signals from any of the checker exceeds a particular value (error threshold amount). In this respect, it will be appreciated that the considerations discussed earlier in respect of whether or not to determine a match apply *mutatis mutandis* here.

Incidentally, another way to evaluate the Figure 8 icon would be to consider pairs of pixel-value ranges for each area. For example, when evaluating the area labelled q in Figure 8, the evaluation circuitry 250 could be configured to compare the pixel values against pixel-value ranges for the image regions D (as foreground) and E (as background). When evaluating the area labelled r in Figure 8, the evaluation circuitry 250 could be configured to compare the pixel values against pixel-value ranges for the image regions E (as foreground) and F (as background). When evaluating the area labelled s in Figure 8, the evaluation circuitry 250 could be configured to compare the pixel values against pixel-value ranges for the image regions F (as foreground) and G (as background). The evaluation performed by the evaluation circuitry 250 could be such that pixel values are not compared against pixel-value ranges for both the image regions D (as foreground) and G (as background) at any time. It will therefore be appreciated that there are many ways in which combinations of pixel-value ranges can be used to evaluate areas in icons having a plurality of image regions.

To provide an example implementation for context, it may be assumed that an icon that is displayed on the display 260 of the control system 1 (e.g. of a vehicle) is made up of 64 x 64 pixels. The frame rate of such a display may be in the range 60- 120 Hz, and there may be up to four icons in one frame. The evaluation performed by the evaluation circuitry 250 may be carried out approximately every 400 ms for example. A round robin method may be implemented, whereby a different area or icon is evaluated by the evaluation circuitry in each frame. In such a typical system, an area may be set to be between 3 x 3 pixels and 5 x 5 pixels in size (of course, they need not be square).

One possible way of assessing suitable values for the various threshold amounts and ranges mentioned above is to employ the evaluation circuitry to test different values on reference icons and possible corresponding display icons. In this way, the pixel-value ranges, the error threshold amount, the tolerance threshold amount, the region bias value, the dropped threshold amount, the number, size and position of areas, and any other parameters or criteria e.g. for determining that a display icon matches a reference icon, can be set accordingly, so that a desired performance (e.g. a level of safety) is achieved. The various values/parameters/criteria as appropriate may be set the same or differently for each icon and may be set the same or differently for each area in an icon.

It will be appreciated that the present invention allows more leniency in the evaluation of display icons, in the sense that image processing/compression effects may affect the display icon compared to the reference icon but the display icon may still be determined to match the reference icon. The pixel-value ranges, the tolerance threshold amount and the error threshold amount, as well as the dropped threshold amount, are set so that, ideally, a display icon passes (is determined to match the reference icon) if it would be sufficiently clear to the user what is being displayed, and so that the display icon fails (is determined to not match the reference icon) if it would not be sufficiently clear to the user what is being displayed (for reasons of safety). For example, the pixel-value ranges, the tolerance threshold amount and the error threshold amount, as well as the dropped threshold amount, may be set so that the display icon is determined to match the reference icon if one image region is shifted a small amount relative to another image region, and if the colour/luminance (or another property) of the display icon is somewhat different from the reference icon.

Circuitry of the present invention (e.g. the evaluation circuitry 250 or other circuitry of the system 1 in Figure 1 including the evaluation circuitry - but excluding of course the display 260) may be implemented as integrated circuitry, for example on an IC chip such as a flip chip.

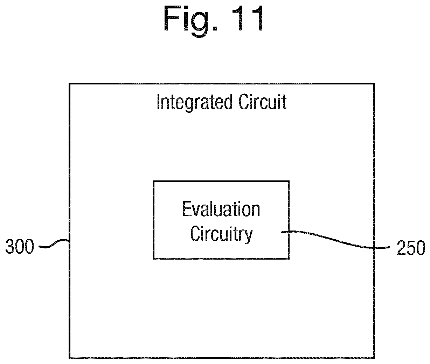

**Figure 11** shows integrated circuitry 300 comprising the evaluation circuitry 250. The present invention extends to integrated circuitry and IC chips as mentioned above, circuit boards comprising such IC chips, and communication networks (for example, internet fiber-optic networks and wireless networks) and network equipment of such networks, comprising such circuit boards.

In any of the above aspects, the various features may be implemented in hardware, or as software modules running on one or more processors. Features of one aspect may be applied to any of the other aspects.

An aspect not encompassed by the wording of the claims provides a computer program or a computer program product for carrying out any of the methods described herein, and a computer readable medium having stored thereon a program for carrying out any of the methods described herein.

A computer program according to the above aspect may be stored on a computer-readable medium, or it could, for example, be in the form of a signal such as a downloadable data signal provided from an Internet website, or it could be in any other form.

## Claims

1. A method of evaluating image data representative of a display icon relative to reference data representative of a reference icon to determine whether the display icon matches the reference icon, the reference icon comprising at least first and second image regions which are distinct in image contrast from one another, the image data defining pixel values corresponding to pixels of the display icon, the method being carried out in hardware and/or by a computer processor, and the method comprising:
for each of a plurality of areas of the display icon, categorising that area as corresponding to one or none of the image regions based on a comparison between the pixel value or values for that area and at least a plurality of pixel-value ranges defined in relation to the reference icon, the pixel-value ranges corresponding to respective said image regions and defined so as to ensure sufficient image contrast between areas categorised as corresponding to different said image regions;
generating categorisation information representative of the image data indicating how the plurality of areas have been categorised; and
determining whether the display icon matches the reference icon based on a comparison of the categorisation information and the reference data,
wherein:
at least one of said areas comprises a plurality of pixels; and
the categorising comprises, for each of the areas comprising a plurality of pixels, comparing the pixel value of each of the pixels of that area against at least a plurality of the pixel-value ranges and preliminarily categorising each of those pixels as corresponding to one or none of the image regions based on the comparison, and categorising the area concerned based on how its pixels have been preliminarily categorised,
wherein the categorising comprises, for each of the areas comprising a plurality of pixels:
categorising that area as corresponding to the first image region if at least a given majority, proportion or number of its pixels have been preliminarily categorised as corresponding to the first image region;
categorising that area as corresponding to the second image region if at least the given majority, proportion or number of its pixels have been preliminarily categorised as corresponding to the second image region; and
categorising that area as corresponding to none of the image regions if there is no image region which at least the given majority, proportion, or number of the area's pixels have been preliminarily categorised as corresponding to,
wherein the method comprises determining that the display icon does not match the reference icon if at least a particular value of the areas of the display icon have been categorised as corresponding to none of the image regions,
wherein in the comparison of the categorisation information and the reference data, the categorisation information for any area categorised as corresponding to none of the image regions is not subject to comparison with the reference data,
wherein the reference data indicates categorisations for reference areas of the reference icon, those categorisations categorising those areas of the reference icon as being in one of the image regions, and wherein the areas of the display icon which are categorised have corresponding said reference areas of the reference icon which have been categorised as being in one of the image regions,
and wherein the method comprises determining that the display icon matches the reference icon based on whether the categorisation information and the reference data indicate that areas of the display icon have been categorised in the same way as corresponding reference areas of the reference icon.

2. The method as claimed in claim 1, wherein the categorising comprises, for each of the areas comprising a plurality of pixels, categorising that area as corresponding to one of the image regions if at least a tolerance threshold amount more of its pixels have been preliminarily categorised as corresponding to that image region than have been categorised as corresponding to any other image region or other image regions.

3. The method as claimed in claim 2, wherein for each of the areas comprising a plurality of pixels the tolerance threshold amount is the number of pixels along the longest straight line, in terms of pixels, of that area.

4. The method as claimed in any of the preceding claims, comprising, for each of the areas comprising a plurality of pixels, preliminarily categorising each of the pixels of that area as corresponding to one of the image regions if the pixel value for that pixel falls within the pixel-value range for that image region.

5. The method as claimed in any of the preceding claims, comprising, for each of the areas comprising a plurality of pixels, preliminarily categorising a pixel of that area as corresponding to none of the image regions if the pixel value for that pixel does not fall within any of the pixel-value ranges against which that pixel value is compared.

6. The method as claimed in any of the preceding claims, wherein which of the pixel-value ranges defined in relation to the reference icon the pixel value or values for a said area are compared against is dependent on the position of the area within the display image.

7. The method as claimed in any of the preceding claims, wherein, for a given said area, the pixel value or values concerned are compared against pixel-value ranges corresponding to two respective said image regions.

8. The method as claimed in claim 6, comprising, for each of the areas comprising a plurality of pixels, categorising the area as corresponding to one of the two image regions for that area if the number of pixels preliminarily categorised as corresponding to that image region is greater than the number of pixels preliminarily categorised as corresponding to the other image region by a tolerance threshold amount.

9. The method as claimed in any of the preceding claims, wherein:
the method comprises determining that the display icon does not match the reference icon if the categorisation information and the reference data indicate that an error threshold amount of the areas of the display icon have been categorised in a different way from corresponding reference areas of the reference icon; and/or
the method comprises determining that the display icon does match the reference icon if the categorisation information and the reference data indicate that a given number or proportion of the areas of the display icon have been categorised in the same way as corresponding reference areas of the reference icon.

10. Evaluation circuitry (250) operable to evaluate image data representative of a display icon relative to reference data representative of a reference icon to determine whether the display icon matches the reference icon, the reference icon comprising at least first and second image regions which are distinct in image contrast from one another, the image data defining pixel values corresponding to pixels of the display icon, the evaluation circuitry (250) configured to carry out the method of any of the preceding claims.

11. A display system (1), comprising:
a display (200); and
a display controller (240) comprising the evaluation circuitry (250) of claim 10,
wherein the display controller (240) is operable to cause the display (200) to display the display icon based on the image data dependent on whether the evaluation circuitry (250) determines that the display icon matches the reference icon.

## Patentansprüche

1. Verfahren zum Beurteilen von Bilddaten, die ein Anzeigesymbol darstellen, relativ zu Referenzdaten, die ein Referenzsymbol darstellen, um zu bestimmen, ob das Anzeigesymbol mit dem Referenzsymbol übereinstimmt, wobei das Referenzsymbol mindestens eine erste und eine zweite Bildregion umfasst, die sich im Bildkontrast voneinander unterscheiden, wobei die Bilddaten Pixelwerte definieren, die Pixeln des Anzeigesymbols entsprechen, wobei das Verfahren in Hardware und/oder durch einen Computerprozessor ausgeführt wird und das Verfahren Folgendes umfasst:
für jeden einer Vielzahl von Bereichen des Anzeigesymbols, Kategorisieren dieses Bereichs als einer oder keiner der Bildregionen entsprechend basierend auf einem Vergleich zwischen dem Pixelwert oder den Pixelwerten für diesen Bereich und mindestens einer Vielzahl von Pixelwertspannen, die in Bezug auf das Referenzsymbol definiert ist, wobei die Pixelwertspannen den jeweiligen Bildregionen entsprechen und so definiert sind, dass ein ausreichender Bildkontrast zwischen Bereichen sichergestellt ist, die als den unterschiedlichen Bildregionen entsprechend kategorisiert sind;
Generieren von Kategorisierungsinformationen, die die Bilddaten darstellen und angeben, wie die Vielzahl von Bereichen kategorisiert wurde; und
Bestimmen, ob das Anzeigesymbol mit dem Referenzsymbol übereinstimmt, basierend auf einem Vergleich der Kategorisierungsinformationen und der Referenzdaten,
wobei:
mindestens einer der Bereiche eine Vielzahl von Pixeln umfasst; und
das Kategorisieren für jeden der Bereiche, der eine Vielzahl von Pixeln umfasst, Vergleichen des Pixelwerts jedes der Pixel dieses Bereichs mit mindestens einer Vielzahl der Pixelwertspannen und vorläufiges Kategorisieren jedes dieser Pixel basierend auf dem Vergleich als einer oder keiner der Bildregionen entsprechend und Kategorisieren des betreffenden Bereichs basierend darauf, wie seine Pixel vorläufig kategorisiert wurden, umfasst,
wobei das Kategorisieren für jeden der Bereiche, die eine Vielzahl von Pixeln umfasst, Folgendes umfasst:
Kategorisieren dieses Bereichs als der ersten Bildregion entsprechend, wenn mindestens eine gegebene Mehrheit, ein gegebener Anteil oder eine gegebene Anzahl seiner Pixel vorläufig als der ersten Bildregion entsprechend kategorisiert wurde;
Kategorisieren dieses Bereichs als der zweiten Bildregion entsprechend, wenn mindestens eine gegebene Mehrheit, ein gegebener Anteil oder eine gegebene Anzahl seiner Pixel vorläufig als der zweiten Bildregion entsprechend kategorisiert wurde; und
Kategorisieren dieses Bereichs als keiner der Bildregionen entsprechend, wenn es keine Bildregion gibt, für die mindestens die gegebene Mehrheit, der gegebene Anteil oder die gegebene Anzahl der Pixel des Bereichs vorläufig als dieser entsprechend kategorisiert wurde,
wobei das Verfahren Bestimmen umfasst, dass das Anzeigesymbol nicht mit dem Referenzsymbol übereinstimmt, wenn mindestens ein konkreter Wert der Bereiche des Anzeigesymbols als keiner der Bildregionen entsprechend kategorisiert wurde,
wobei beim Vergleich der Kategorisierungsinformationen und der Referenzdaten die Kategorisierungsinformationen für jeden Bereich, der als keiner der Bildregionen entsprechend kategorisiert ist, keinem Vergleich mit den Referenzdaten unterliegen,
wobei die Referenzdaten Kategorisierungen für Referenzbereiche des Referenzsymbols angeben, wobei diese Kategorisierungen diese Bereiche des Referenzsymbols als in einer der Bildregionen liegend kategorisieren und wobei die kategorisierten Bereiche des Anzeigesymbols entsprechende Referenzbereiche des Referenzsymbols aufweisen, die als in einer der Bildregionen liegend kategorisiert wurden,
und wobei das Verfahren Bestimmen umfasst, dass das Anzeigesymbol mit dem Referenzsymbol übereinstimmt, basierend darauf, ob die Kategorisierungsinformationen und die Referenzdaten angeben, dass Bereiche des Anzeigesymbols auf die gleiche Weise kategorisiert wurden wie entsprechende Referenzbereiche des Referenzsymbols.

2. Verfahren nach Anspruch 1, wobei das Kategorisieren für jeden der Bereiche, der eine Vielzahl von Pixeln umfasst, Kategorisieren dieses Bereichs als einer der Bildregionen entsprechend umfasst, wenn mindestens eine Toleranzschwellenmenge mehr seiner Pixel vorläufig als dieser Bildregion entsprechend kategorisiert wurden als einer anderen Bildregion oder anderen Bildregionen entsprechend kategorisiert wurden.

3. Verfahren nach Anspruch 2, wobei für jeden der Bereiche, der eine Vielzahl von Pixeln umfasst, die Toleranzschwellenmenge die Anzahl von Pixeln entlang der längsten geraden Linie dieses Bereichs im Hinblick auf Pixel ist.

4. Verfahren nach einem der vorhergehenden Ansprüche, umfassend, für jeden der Bereiche, der eine Vielzahl von Pixeln umfasst, vorläufiges Kategorisieren jedes der Pixel dieses Bereichs als einer der Bildregionen entsprechend, wenn der Pixelwert für dieses Pixel innerhalb der Pixelwertspanne für diese Bildregion liegt.

5. Verfahren nach einem der vorhergehenden Ansprüche, umfassend, für jeden der Bereiche, der eine Vielzahl von Pixeln umfasst, vorläufiges Kategorisieren eines Pixels dieses Bereichs als keiner der Bildregionen entsprechend, wenn der Pixelwert für dieses Pixel nicht innerhalb einer der Pixelwertspannen, mit denen dieser Pixelwert verglichen wird, liegt.

6. Verfahren nach einem der vorhergehenden Ansprüche, wobei es von der Position des Bereichs innerhalb des Anzeigebilds abhängt, mit welcher der in Bezug auf das Referenzsymbol definierten Pixelwertspannen der Pixelwert oder die Pixelwerte für den Bereich verglichen werden.

7. Verfahren nach einem der vorhergehenden Ansprüche, wobei für einen gegebenen Bereich der betreffende Pixelwert oder die betreffenden Pixelwerte mit Pixelwertspannen verglichen werden, die zwei jeweiligen Bildregionen entsprechen.

8. Verfahren nach Anspruch 6, umfassend, für jeden der Bereiche, der eine Vielzahl von Pixeln umfasst, Kategorisieren des Bereichs als einer der zwei Bildregionen für diesen Bereich entsprechend, wenn die Anzahl von Pixeln, die vorläufig als dieser Bildregion entsprechend kategorisiert wurden, um eine Toleranzschwellenmenge größer ist als die Anzahl von Pixeln, die vorläufig als der anderen Bildregion entsprechend kategorisiert wurden.

9. Verfahren nach einem der vorhergehenden Ansprüche, wobei:
das Verfahren Bestimmen umfasst, dass das Anzeigesymbol nicht mit dem Referenzsymbol übereinstimmt, wenn die Kategorisierungsinformationen und die Referenzdaten angeben, dass eine Fehlerschwellenmenge der Bereiche des Anzeigesymbols auf andere Weise kategorisiert wurde wie entsprechende Referenzbereiche des Referenzsymbols; und/oder
wobei das Verfahren Bestimmen umfasst, dass das Anzeigesymbol mit dem Referenzsymbol übereinstimmt, wenn die Kategorisierungsinformationen und die Referenzdaten angeben, dass eine gegebene Anzahl oder ein gegebener Anteil der Bereiche des Anzeigesymbols auf die gleiche Weise kategorisiert wurde wie entsprechende Referenzbereiche des Referenzsymbols.

10. Beurteilungsschaltung (250), die betreibbar ist, um Bilddaten, die ein Anzeigesymbol darstellen, relativ zu Referenzdaten, die ein Referenzsymbol darstellen, zu beurteilen, um zu bestimmen, ob das Anzeigesymbol mit dem Referenzsymbol übereinstimmt, wobei das Referenzsymbol mindestens eine erste und eine zweite Bildregion umfasst, die sich im Bildkontrast voneinander unterscheiden, wobei die Bilddaten Pixelwerte definieren, die Pixeln des Anzeigesymbols entsprechen, wobei die Beurteilungsschaltung (250) zum Ausführen des Verfahrens nach einem der vorhergehenden Ansprüche konfiguriert ist.

11. Anzeigesystem (1), umfassend:
eine Anzeige (200); und
eine Anzeigesteuerung (240), die die Beurteilungsschaltung (250) nach Anspruch 10 umfasst,
wobei die Anzeigesteuerung (240) betreibbar ist, um zu veranlassen, dass die Anzeige (200) das Anzeigesymbol basierend auf den Bilddaten anzeigt, abhängig davon, ob die Beurteilungsschaltung (250) bestimmt, dass das Anzeigesymbol mit dem Referenzsymbol übereinstimmt.

## Revendications

1. Procédé d'évaluation de données d'image représentatives d'une icône d'affichage par rapport à des données de référence représentatives d'une icône de référence pour déterminer si l'icône d'affichage correspond à l'icône de référence, l'icône de référence comprenant au moins des première et seconde régions d'image qui sont distinctes en termes de contraste d'image les unes des autres, les données d'image définissant des valeurs de pixels correspondant à des pixels de l'icône d'affichage, le procédé étant mis en œuvre dans le matériel et/ou par un processeur informatique, et le procédé comprenant :
pour chacune d'une pluralité de zones de l'icône d'affichage, la catégorisation de cette zone comme correspondant à l'une ou à aucune des régions d'image sur la base d'une comparaison entre la ou les valeurs de pixel pour cette zone et au moins une pluralité de plages de valeurs de pixel définies par rapport à l'icône de référence, les plages de valeurs de pixel correspondant auxdites régions d'image respectives et définies de manière à assurer un contraste d'image suffisant entre des zones classées comme correspondant à différentes desdites régions d'image ;
la génération d'informations de catégorisation représentatives des données d'image indiquant comment la pluralité de zones ont été catégorisées ; et
le fait de déterminer si l'icône d'affichage correspond à l'icône de référence sur la base d'une comparaison des informations de catégorisation et des données de référence,
dans lequel :
au moins une desdites zones comprend une pluralité de pixels ; et
la catégorisation comprend, pour chacune des zones comprenant une pluralité de pixels, la comparaison de la valeur de pixel de chacun des pixels de cette zone avec au moins une pluralité des plages de valeurs de pixel et la catégorisation préliminaire de chacun de ces pixels comme correspondant à un ou aucune des régions d'image sur la base de la comparaison, et la catégorisation de la zone concernée en fonction de la façon dont ses pixels ont été préalablement catégorisés,
dans lequel la catégorisation comprend, pour chacune des zones comprenant une pluralité de pixels :
la catégorisation de cette zone comme correspondant à la première région d'image si au moins une majorité, une proportion ou un nombre donné de ses pixels ont été préalablement catégorisés comme correspondant à la première région d'image ;
la catégorisation de cette zone comme correspondant à la seconde région d'image si au moins une majorité, une proportion ou un nombre donné de ses pixels ont été préalablement catégorisés comme correspondant à la seconde région d'image ; et
la catégorisation de cette zone comme ne correspondant à aucune des régions d'image s'il n'y a pas de région d'image à laquelle au moins la majorité, la proportion ou le nombre donné de pixels de la zone a été préalablement catégorisé comme correspondant, dans lequel le procédé comprend la détermination que l'icône d'affichage ne correspond pas à l'icône de référence si au moins une valeur particulière des zones de l'icône d'affichage a été catégorisée comme ne correspondant à aucune des régions d'image, dans lequel, lors de la comparaison des informations de catégorisation et des données de référence, les informations de catégorisation pour toute zone catégorisée comme ne correspondant à aucune des régions d'image ne sont pas soumises à une comparaison avec les données de référence,
dans lequel les données de référence indiquent des catégorisations pour les zones de référence de l'icône de référence, ces catégorisations catégorisant ces zones de l'icône de référence comme étant dans l'une des régions d'image, et dans lequel les zones de l'icône d'affichage qui sont catégorisées ont lesdites zones de référence correspondantes de l'icône de référence qui ont été catégorisées comme étant dans l'une des régions de l'image,
et dans lequel le procédé comprend la détermination que l'icône d'affichage correspond à l'icône de référence selon que les informations de catégorisation et les données de référence indiquent que des zones de l'icône d'affichage ont été catégorisées de la même manière que les zones de référence correspondantes de l'icône de référence.

2. Procédé selon la revendication 1, dans lequel la catégorisation comprend, pour chacune des zones comprenant une pluralité de pixels, la catégorisation de cette zone comme correspondant à l'une des régions d'image si au moins une quantité de seuil de tolérance de ses pixels préalablement catégorisés comme correspondant à cette région d'image est supérieure à ceux catégorisés comme correspondant à toute autre région d'image ou à d'autres régions d'image.

3. Procédé selon la revendication 2, dans lequel pour chacune des zones comprenant une pluralité de pixels, la quantité de seuil de tolérance est le nombre de pixels le long de la ligne droite la plus longue, en termes de pixels, de cette zone.

4. Procédé selon l'une quelconque des revendications précédentes, comprenant, pour chacune des zones comprenant une pluralité de pixels, la catégorisation préliminaire de chacun des pixels de cette zone comme correspondant à l'une des régions d'image si la valeur de pixel pour ce pixel se situe dans la plage de valeurs de pixel pour cette région d'image.

5. Procédé selon l'une quelconque des revendications précédentes, comprenant, pour chacune des zones comprenant une pluralité de pixels, la catégorisation préliminaire d'un pixel de cette zone comme ne correspondant à aucune des régions d'image si la valeur de pixel pour ce pixel ne tombe pas dans l'une des plages de valeurs de pixel auxquelles cette valeur de pixel est comparée.

6. Procédé selon l'une quelconque des revendications précédentes, dans lequel les plages de valeurs de pixel définies par rapport à l'icône de référence auxquelles la ou les valeurs de pixel pour une dite zone sont comparées dépendent de la position de la zone dans l'image d'affichage.

7. Procédé selon l'une quelconque des revendications précédentes, dans lequel, pour une dite zone donnée, la ou les valeurs de pixel concernées sont comparées à des plages de valeurs de pixel correspondant à deux desdites régions d'image respectives.

8. Procédé selon la revendication 6, comprenant, pour chacune des zones comprenant une pluralité de pixels, la catégorisation de la zone comme correspondant à l'une des deux régions d'image pour cette zone si le nombre de pixels préalablement catégorisés comme correspondant à cette région d'image est supérieur au nombre de pixels préalablement catégorisés comme correspondant à l'autre région d'image par une quantité de seuil de tolérance.

9. Procédé selon l'une quelconque des revendications précédentes, dans lequel
le procédé consiste à déterminer que l'icône d'affichage ne correspond pas à l'icône de référence si les informations de catégorisation et les données de référence indiquent qu'une quantité de seuil d'erreur des zones de l'icône d'affichage a été catégorisée d'une manière différente des zones de référence correspondantes de l'icône de référence ; et/ou
le procédé consiste à déterminer que l'icône d'affichage correspond à l'icône de référence selon que les informations de catégorisation et les données de référence indiquent que des zones de l'icône d'affichage ont été catégorisées de la même manière que les zones de référence correspondantes de l'icône de référence.

10. Circuit d'évaluation (250) utilisable pour évaluer des données d'image représentatives d'une icône d'affichage par rapport à des données de référence représentatives d'une icône de référence pour déterminer si l'icône d'affichage correspond à l'icône de référence, l'icône de référence comprenant au moins des première et seconde régions d'image qui sont distinctes en termes de contraste d'images, l'une par rapport à l'autre, les données d'image définissant des valeurs de pixel correspondant aux pixels de l'icône d'affichage, le circuit d'évaluation (250) étant configuré pour exécuter le procédé selon l'une quelconque des revendications précédentes.

11. Système d'affichage stéréo (1) comprenant :
un affichage (200) ; et
un contrôleur d'affichage (240) comprenant le circuit d'évaluation (250) de la revendication 10,
dans lequel le contrôleur d'affichage (240) est utilisable pour amener l'affichage (200) à afficher l'icône d'affichage sur la base des données d'image selon que le circuit d'évaluation (250) détermine que l'icône d'affichage correspond à l'icône de référence.
